(19) Europäisches Patentamt / European Patent Office / Office européen des brevets

(11) **EP 3 701 143 B1**

(12) **EUROPÄISCHE PATENTSCHRIFT**

(45) Veröffentlichungstag und Bekanntmachung des Hinweises auf die Patenterteilung:
**13.07.2022   Patentblatt 2022/28**

(21) Anmeldenummer: **18795435.9**

(22) Anmeldetag: **23.10.2018**

(51) Internationale Patentklassifikation (IPC):
**F03D 1/06** *(2006.01)*

(52) Gemeinsame Patentklassifikation (CPC):
**F03D 1/0633; F03D 1/0675; F05B 2240/302;** Y02E 10/72

(86) Internationale Anmeldenummer:
**PCT/EP2018/079039**

(87) Internationale Veröffentlichungsnummer:
**WO 2019/081510 (02.05.2019 Gazette 2019/18)**

(54) **ROTORBLATT EINER WINDENERGIEANLAGE UND VERFAHREN ZU DESSEN AUSLEGUNG**

ROTOR BLADE OF A WIND TURBINE AND METHOD FOR DESIGNING SAME

PALE DE ROTOR D'UNE ÉOLIENNE ET PROCÉDÉ DE CONCEPTION DE CELLE-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2017   DE 102017124861**

(43) Veröffentlichungstag der Anmeldung:
**02.09.2020   Patentblatt 2020/36**

(73) Patentinhaber: **Wobben Properties GmbH**
**26607 Aurich (DE)**

(72) Erfinder:
• **MESSING, Ralf**
  **26605 Aurich (DE)**
• **KIMILLI, Mustafa Onur**
  **81371 München (DE)**
• **RUBNER, Florian**
  **26607 Aurich (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
| | |
|---|---|
| EP-A1- 2 366 891 | EP-A2- 2 391 807 |
| EP-B1- 2 366 891 | EP-B1- 2 391 807 |
| WO-A2-2010/048958 | US-A1- 2015 064 017 |

## Beschreibung

Die vorliegende Erfindung betrifft ein Rotorblatt einer Windenergieanlage sowie ein Verfahren zur Auslegung eines Rotorblattes einer Windenergieanlage. Die vorliegende Erfindung betrifft insbesondere ein zweiteiliges bzw. mehrteiliges Rotorblatt sowie ein dazu zugehöriges Verfahren.

Rotorblätter für Windenergieanlagen sind bekannt. In der Vergangenheit wurden größtenteils einstückige, ungeteilte Rotorblätter eingesetzt, die im Rahmen der immer größer werdenden Ausmaße sukzessive an Grenzen, insbesondere betreffend den Transport, stoßen.

Aus diesem Grund wird damit begonnen, geteilte Rotorblätter zu fertigen, die einfacher zu transportieren als ungeteilte Blätter sind, und an der Baustelle durch einen Monteur montiert werden. Geteilte Rotorblätter bringen einige Herausforderungen bei der Auslegung und dem Entwurf der Rotorblätter mit sich, da unter anderem die Montierbarkeit auf der Baustelle aber auch die durch die Verbindungsstelle erhöhten Blattmassen und damit auf die Anlage zu erwartenden zusätzlichen Lasten gegenüber einem einteiligen Entwurf zu berücksichtigen sind.

US 2015/064017 A1 beschreibt das Rotorblatt einer Windkraftanlage, welches eine Rotorblattwurzel zur Befestigung des Rotorblatts an einer Rotornabe und eine Rotorblattspitze umfasst, die an einer von der Rotorblattwurzel entfernten Seite angeordnet ist, sowie eine Windkraftanlage mit solchen Rotorblättern. In dieser Anordnung hat eine relative Profildicke, die als das Verhältnis von Profildicke zu Profiltiefe definiert ist, ein lokales Maximum in einem zentralen Bereich zwischen Rotorblattwurzel und Rotorblattspitze.

Vor diesem Hintergrund war es eine Aufgabe der vorliegenden Erfindung, ein geteiltes Rotorblatt bereitzustellen, das die Konsequenzen der bekannten Nachteile und Schwierigkeiten geteilter Rotorblätter nach Möglichkeit minimiert.

Die Aufgabe wird erfindungsgemäß durch ein Rotorblatt einer Windenergieanlage gelöst, wobei das Rotorblatt in Längsrichtung an einer Trennstelle in wenigstens eine nabennahe Rotorblattkomponente und eine nabenferne Rotorblattkomponente geteilt ist, wobei die nabennahe und die nabenferne Rotorblattkomponente für einen Betrieb der Windenergieanlage an der Trennstelle verbindbar sind, wobei ein Verhältnis aus Profildicke zu Profiltiefe, genannt relative Dicke, an der Trennstelle innerhalb eines Bereiches von 0,4 bis 0,5 liegt.

Die relative Dicke innerhalb eines Bereiches von 0,4 bis 0,5 an der Trennstelle stellt einen unerwartet hohen Wert dar. Es ist gerade eine Erkenntnis der vorliegenden Erfindung, dass trotz des hohen Wertes der relativen Dicke im Ergebnis ein vorteilhaftes Blatt zu erwarten ist. Aus aerodynamischer Sicht sind nämlich Profile mit hohen relativen Dicken unvorteilhaft, da diese zum einen schlechtere Gleitzahlen aufweisen als Profile mit niedrigerer relativer Dicke, zum anderen generell auch geringere Auftriebsbeiwerte aufweisen. Dieser aus aerodynamischer Sicht unvorteilhafte Effekt wird aber dadurch kompensiert, dass die Profile mit höheren, relativen Dicken strukturelle Vorteile mit sich bringen, die insbesondere eine leichtere Konstruktion des Rotorblattes ermöglichen. Durch den erfindungsgemäß gewählten Bereich von 0,4 bis 0,5 ist eine besonders vorteilhafte Kombination aus aerodynamisch wirksamem Blatt und vergleichsweise niedrigen Anlagenlasten für zweigeteilte Rotorblätter erreichbar.

Besonders vorzugsweise liegt die relative Dicke an der Trennstelle innerhalb eines Bereiches von 0,42 bis 0,46. Es hat sich herausgestellt, dass besonders innerhalb dieses Wertebereiches besonders effiziente zweigeteilte Rotorblätter realisierbar sind.

Eine Summe der Längen der an der Trennstelle verbundenen nabennahen und nabenfernen Rotorblattkomponente ergibt eine Blattlänge des Rotorblattes, wobei die Trennstelle sich in einem Bereich von 27% bis 33% der Blattlänge von der Nabe aus betrachtet, befindet.

Die Trennstelle ist immer mit einem höheren lokalen Gewicht verbunden, als die umliegenden Stellen des Rotorblattes. Aus diesem Grund wäre es eigentlich wünschenswert, die Trennstelle so nahe wie möglich an die Rotornabe zu legen. Dadurch werden allerdings die Vorteile eines zweiteiligen bzw. mehrteiligen Rotorblattes ausgehebelt, nämlich insbesondere die Vorteile betreffend den Transport. Diese würden, im Idealfall bedeuten, die Trennstelle im Bereich von 50% der Blattlänge vorzusehen. Es hat sich herausgestellt, dass es als Kompromiss zwischen der sich einstellenden Massenverteilung des Rotorblattes und der Ausschöpfung der Vorteile eines zweiteiligen bzw. mehrteiligen Rotorblattes besonders effektiv ist, die Trennstelle in dem engen Bereich zwischen 27% und 33% der Blattlänge vorzusehen.

In einer Ausführungsform beträgt eine absolute Dicke des Rotorblattes an der Trennstelle mindestens 1,70 m.

Indem die absolute Dicke des Rotorblattes an der Trennstelle mindestens 1,70 m beträgt, ist es für einen Monteur möglich, zu der Trennstelle innerhalb des Rotorblattes zu gelangen und die beiden Rotorblattkomponenten an der Trennstelle miteinander zu verbinden. Die Anforderung an die absolute Dicke an der Trennstelle zusammen mit der Position der Trennstelle und der relativen Dicke an der Trennstelle führen zu einem Rotorblatt, das innerhalb der allgemein bekannten Transportbeschränkungen ausführbar ist. Insbesondere führt ein derartig ausgeführtes Rotorblatt nicht zu einer Profiltiefe, die Schwierigkeiten für den Transport mit sich bringt.

In einer Ausführungsform ist eine mittlere relative Dicke zwischen einer ersten Position der relativen Blattlänge und einer zweiten Position der relativen Blattlänge als ein Verhältnis des bestimmten Integrals der relativen Dicke von der ersten Position zu der zweiten Position zu einem Abstand zwischen erster Position und zweiter Position definiert.

Vorzugsweise beträgt die mittlere relative Dicke von 20% bis 30% der relativen Blattlänge wenigstens 0,460.

Vorzugsweise beträgt alternativ oder zusätzlich die mittlere relative Dicke von 20% bis 50% der relativen Blattlänge wenigstens 0,390.

Vorzugsweise beträgt alternativ oder zusätzlich die mittlere relative Dicke von 20% bis 70% der relativen Blattlänge wenigstens 0,33, insbesondere wenigstens 0,35.

Es hat sich herausgestellt, dass insbesondere der nabennahe Bereich von 0% bis 20% der Blattlänge im Wesentlichen unbeeinflusst von der Auslegung als zweiteiliges bzw. mehrteiliges Rotorblatt ausgelegt werden kann. Im Bereich ab 20%, insbesondere bis 30 bzw. 50 oder 70% der relativen Blattlänge ist allerdings eine Erkenntnis der vorliegenden Erfindung, dass die mittlere relative Dicke einen deutlich höheren Wert annimmt, als dies bei bekannten Rotorblättern, insbesondere bei bekannten einteiligen Rotorblättern der Fall war. Anders ausgedrückt, die an der Trennstelle bereits übermäßig hohe relative Dicke im Bereich von 0,4 bis 0,5 zieht sich über einen weiteren Bereich des Rotorblattes hindurch, so dass auch über weitere Bereiche des Rotorblattes eine überdurchschnittlich hohe relative Dicke vorherrscht.

Es ist gerade eine Erkenntnis der vorliegenden Erfindung, dass trotz des hohen Wertes der relativen Dicke im Ergebnis ein vorteilhaftes Blatt zu erwarten ist. Aus aerodynamischer Sicht sind nämlich Profile mit hohen relativen Dicken unvorteilhaft, da diese zum einen schlechtere Gleitzahlen aufweisen als Profile mit niedrigerer relativer Dicke, zum anderen generell auch geringere Auftriebsbeiwerte aufweisen. Dieser aus aerodynamischer Sicht unvorteilhafte Effekt wird aber dadurch kompensiert, dass die mit einer höheren relativen Dicke verbundenen aerodynamischen Nachteile bei zweigeteilten Rotorblättern durch die gleichzeitig erzielten strukturellen Vorteile aufgewogen werden. Dies wird insbesondere dadurch erreicht, dass die Masse des Außenblattes durch die höhere relative Dicke niedrig gehalten werden kann.

In einer Ausführungsform ist eine Konstruktionsmaßzahl als bestimmtes Integral der relativen Dicke über einen Bereich der relativen Blattlänge definiert, wobei eine untere Grenze des Integrals auf eine Position von 20% der Blattlänge festgelegt ist und die Konstruktionsmaßzahl für beliebige Werte der oberen Grenze auswertbar ist.

Vorzugsweise beträgt die Konstruktionsmaßzahl für eine obere Grenze von 45% der Blattlänge mindestens 0,1.

Vorzugsweise beträgt alternativ oder zusätzlich die Konstruktionsmaßzahl für eine obere Grenze von 80% der Blattlänge mindestens 0,2.

Vorzugsweise beträgt alternativ oder zusätzlich die Konstruktionsmaßzahl für die obere Grenze von 45% der Blattlänge höchstens 0,12.

Vorzugsweise beträgt alternativ oder zusätzlich die Konstruktionsmaßzahl für die obere Grenze von 80% der Blattlänge höchstens 0,24.

Die derart definierte Konstruktionsmaßzahl hat sich als besonders geeignet herausgestellt, die hohen Masse des Innenblattes inklusive der Trennstelle über den weiteren Blattverlauf zu kompensieren, ohne die Anlagenlasten negativ zu beeinflussen. Wird bei der Auslegung des Rotorblattes die Konstruktionsmaßzahl innerhalb des bevorzugten Bereiches gehalten, wird demnach als Ergebnis ein besonders optimal ausgelegtes zweiteiliges bzw. mehrteiliges Rotorblatt erhalten.

Die Aufgabe wird ferner durch eine Windenergieanlage mit wenigstens einem erfindungsgemäßen Rotorblatt gelöst. Durch die Verwendung der erfindungsgemäßen Rotorblätter wird auch die erfindungsgemäße Windenergieanlage verbessert. Insbesondere können die vorteilhaften Ausgestaltungen der erfindungsgemäßen Rotorblätter auch analog auf die Windenergieanlage angewandt werden.

Die Aufgabe wird ferner durch einen Windpark mit mehreren erfindungsgemäßen Windenergieanlagen gelöst. Die mehreren erfindungsgemäßen Windenergieanlagen unterstützen die Optimierung des Windparks. Insbesondere können die vorteilhaften Ausgestaltungen der erfindungsgemäßen Rotorblätter und Windenergieanlagen auch analog auf den Windpark angewandt werden.

Die Aufgabe wird ferner durch ein Verfahren zur Auslegung eines Rotorblattes einer Windenergieanlage gelöst. Das Rotorblatt ist in Längsrichtung an einer Trennstelle in wenigstens eine nabennahe Rotorblattkomponente und eine nabenferne Rotorblattkomponente geteilt, wobei die nabennahe und die nabenferne Rotorblattkomponente für einen Betrieb der Windenergieanlage an der Trennstelle verbindbar sind. Das Verfahren umfasst einen Schritt des Festlegens eines Verhältnisses aus Profildicke zu Profiltiefe, genannt relative Dicke, an der Trennstelle innerhalb eines Bereiches von 0,4 bis 0,5, insbesondere innerhalb eines Bereiches von 0,42 bis 0,46.

Das erfindungsgemäße Verfahren ermöglicht die gleichen Vorteile zu erreichen, wie sie durch das erfindungsgemäße Rotorblatt erzielt werden. Insbesondere führt die Durchführung des erfindungsgemäßen Verfahrens zu einem erfindungsgemäßen Rotorblatt. Auch die bevorzugten Ausgestaltungen der Ausführungsformen des Rotorblattes lassen sich in analoger Weise auf das Verfahren übertragen.

In einer Ausführungsform des Verfahrens erfolgt zur Auslegung des Rotorblattes eine Abwägung zwischen strukturell nötiger höherer relativer Dicke an der Trennstelle und aerodynamisch gewünschter geringerer relativer Dicke an der Trennstelle anhand einer mittleren relativen Dicke, wobei die mittlere relative Dicke zwischen einer ersten Position der relativen Blattlänge und einer zweiten Position der relativen Blattlänge als ein Verhältnis des bestimmten Integrals der relativen Dicke von der ersten Position zu der zweiten Position zu einem Abstand zwischen erster Position und zweiter Position definiert ist.

Vorzugsweise beträgt die mittlere relative Dicke von 20% bis 30% der relativen Blattlänge wenigstens 0,460.

Vorzugsweise beträgt alternativ oder zusätzlich die mittlere relative Dicke von 20% bis 50% der relativen Blattlänge wenigstens 0,390.

Vorzugsweise beträgt alternativ oder zusätzlich wobei die mittlere relative Dicke von 20% bis 70% der relativen Blattlänge wenigstens 0,33, insbesondere wenigstens 0,35.

In einer Ausführungsform des Verfahrens erfolgt zur Auslegung des Rotorblattes eine Abwägung zwischen strukturell nötiger höherer relativer Dicke an der Trennstelle und aerodynamisch gewünschter geringerer relativer Dicke an der Trennstelle anhand einer Konstruktionsmaßzahl, wobei die Konstruktionsmaßzahl als bestimmtes Integral der relativen Dicke über einen Bereich der relativen Blattlänge definiert ist, wobei eine untere Grenze des Integrals auf eine Position von 20% der Blattlänge festgelegt ist und die Konstruktionsmaßzahl für beliebige Werte der oberen Grenze auswertbar ist.

Vorzugsweise beträgt die Konstruktionsmaßzahl für eine obere Grenze von 45% der Blattlänge mindestens 0,1.

Vorzugsweise beträgt alternativ oder zusätzlich die Konstruktionsmaßzahl für eine obere Grenze von 80% der Blattlänge mindestens 0,2.

Vorzugsweise beträgt alternativ oder zusätzlich die Konstruktionsmaßzahl für die obere Grenze von 45% der Blattlänge höchstens 0,12.

Vorzugsweise beträgt alternativ oder zusätzlich die Konstruktionsmaßzahl für die obere Grenze von 80% der Blattlänge höchstens 0,24.

Weitere Vorteile und bevorzugte Ausgestaltungen werden im Folgenden mit Verweis auf die Ausführungsbeispiele der beigefügten Figuren genauer beschrieben. Hierbei zeigen:

Fig. 1    schematisch und exemplarisch eine Windenergieanlage,

Fig. 2    schematisch und exemplarisch Verläufe relativer Blattdicken von Rotorblättern,

Fig. 3    schematisch und exemplarisch Verläufe einer Konstruktionsmaßzahl über die mit der maximalen Rotorblattlänge normierten Blattlänge von Rotorblättern und

Fig. 4    schematisch und exemplarisch Verläufe einer mittleren relativen Dicke über die mit der maximalen Rotorblattlänge normierten Blattlänge von Rotorblättern.

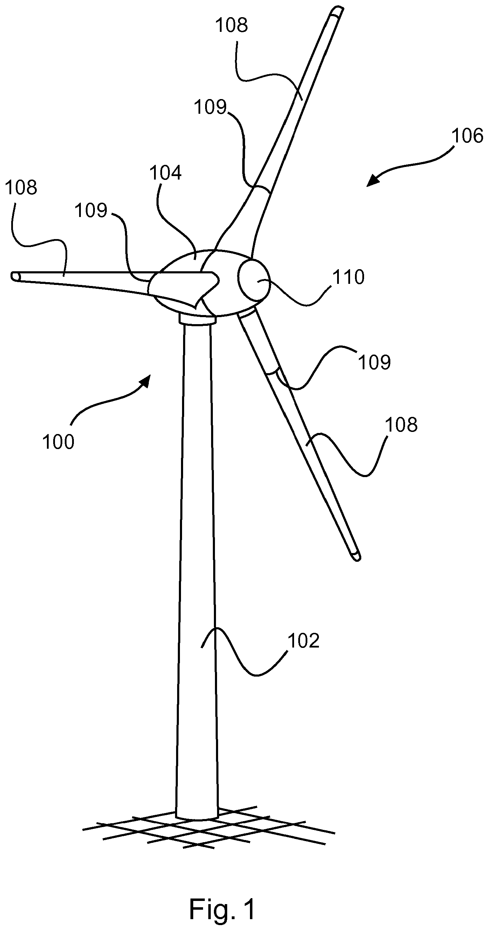

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Der Spinner 110 umhüllt eine Rotornabe (nicht gezeigt) des Rotors 106.

Die Rotorblätter 108 sind jeweils zweigeteilt und weisen eine Trennstelle 109 auf, die eine nabennahe Rotorblattkomponente von einer nabenfernen Rotorblattkomponente trennt. In anderen Beispielen sind genauso mehr als zweigeteilte, beispielsweise dreigeteilte oder viergeteilte Rotorblätter 108 vorstellbar, die mehr als eine Trennstelle aufweisen.

Geteilte Rotorblätter 108 sind einfacher zu transportieren als ungeteilte Rotorblätter 108 und bieten ferner auch Vorteile in der Produktion, beispielsweise durch den Einsatz der Wickeltechnik. Ein bekannter Nachteil geteilter Rotorblätter 108 ist allerdings die in der Regel höhere Blattmasse als die ungeteilter Rotorblätter 108 ähnlicher Ausmaße. Die gezeigten zweigeteilten Rotorblätter 108 führen demnach in der Regel zu höheren Lasten der Windenergieanlage 100.

Zur Montage wird beispielsweise die nabennahe Rotorblattkomponente und die nabenferne Rotorblattkomponente an der Trennstelle 109 auf der Baustelle blattinnenseitig verschraubt. Damit dies durch einen Monteur gewährleistet werden kann, ist die Dicke des Rotorblattes 108 an der Trennstelle 109 beispielsweise mindestens 1,70 m. Bei kleineren Dicken an der Trennstelle 109 sind entsprechend andere Verbindungskonzepte vorzusehen.

Zur optimalen Verteilung der Lasten würde die Trennstelle 109 ein zylindrisches Profil mit relativer Dicke im Bereich 1 aufweisen. Da die Trennstelle 109 allerdings in einem Bereich des Rotorblattes 108 liegt, insbesondere in einem Bereich von 25 bis 38% der Blattlänge, an dem bereits deutliche Auswirkungen auf den Ertrag spürbar sind, ist eine Profilierung vorzunehmen. Aus aerodynamischen Gründen soll demnach die relative Dicke der Profilierung an der Trennstelle 109, das heißt das Verhältnis aus Blattdicke zu Blatttiefe an der Trennstelle 109, möglichst gering ausfallen. Eine geringe relative Dicke im Bereich der Trennstelle 109 würde allerdings, was direkt aus der Definition der relativen Blattdicke folgt, zu hohen Blatttiefen an der Trennstelle 109 führen, was im Gegenzug unvorteilhaft sowohl auf Anlagenlasten als auch auf den Transport der Rotorblätter 108 einwirkt.

Erfindungsgemäß hat sich als besonders bevorzugt herausgestellt, die Trennstelle auf eine relative Dicke im Bereich von 0,4 bis 0,5, insbesondere von 0,42 bis 0,46 festzulegen. Dies ermöglicht ein Rotorblatt zu erhalten, das sowohl die zu erwartenden Lasten, die aerodynamische Wirksamkeit aber auch die Masse des Rotorblattes 108 als Ganzes angemessen berücksichtigt.

Im Vergleich zu einteiligen Rotorblättern ergeben sich dadurch, insbesondere bedingt durch die Trennstelle 109, hohe relative Dicken im nabennahen Bereich des Rotorblattes 108.

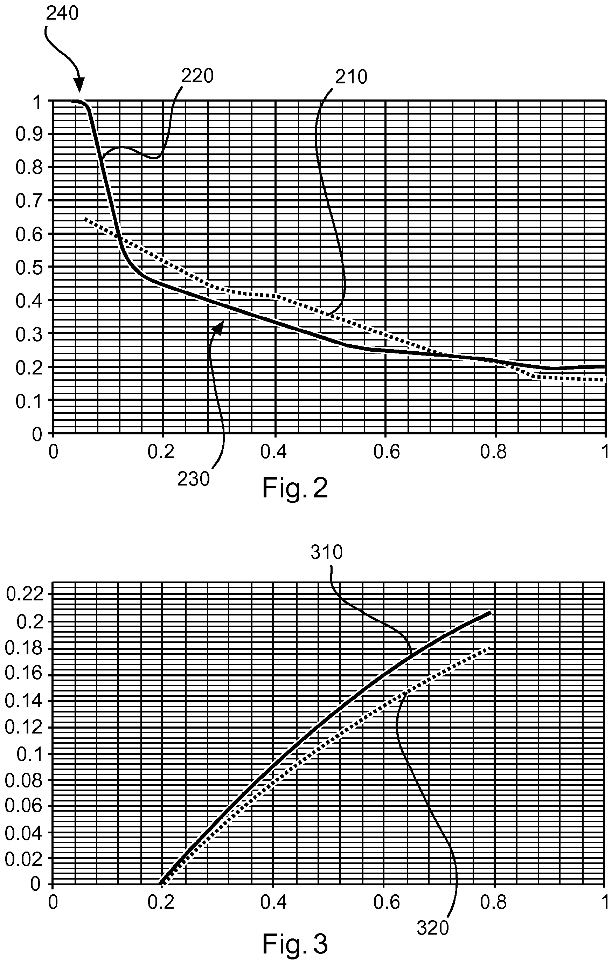

Fig. 2 zeigt schematisch und exemplarisch einen Verlauf 210 der relativen Blattdicke eines zweigeteilten erfindungsgemäßen Rotorblattes 108. Zum Vergleich ist in der gleichen Figur ein Verlauf 220 der relativen Blattdicke eines bekannten einteiligen Rotorblattes als Linie dargestellt. Es kann gesehen werden, dass über einen weiten Verlauf der Rotorblattlänge der relative Dickenverlauf 210 über dem relativen Dickenverlauf 220 liegt. Dies bedeutet, dass das erfindungsgemäße zweigeteilte Rotorblatt 108 über einen weiten Verlauf eine höhere relative Dicke als bekannte Rotorblätter aufweist, um die Masse des Außenblattes niedrig zu halten und dadurch die hohe Masse des Innenblattes inklusive der Trennstelle 109 nach Möglichkeit zu kompensieren und die Gesamtmasse des Rotorblattes 108 im Hinblick auf die Anlagenlasten möglichst gering zu halten.

Ein Bereich der Trennstelle 109 ist mit einem Pfeil 230 angedeutet. In dem Bereich der Rotornabe, der mit einem Pfeil 240 gekennzeichnet ist, weist der bekannte Dickenverlauf 220 ein kreiszylindrisches Profil auf, was an der relativen Dicke von 1 erkennbar ist. Es sind ebenfalls weitere Profilverläufe 220 bekannt, die nicht im Nabenbereich 240 eine Kreiszylinderform zeigen. Im Vergleich mit dem erfindungsgemäßen Rotorblatt 108 weisen jedoch sämtliche der bekannten Rotorblätter bzw. deren Dickenverläufe 220 im Bereich der Trennstelle 230, das heißt besonders zwischen 25% und 38% der Rotorblattlänge, relative Dicken auf, die deutlich unterhalb des Dickenverlaufs 210 liegen.

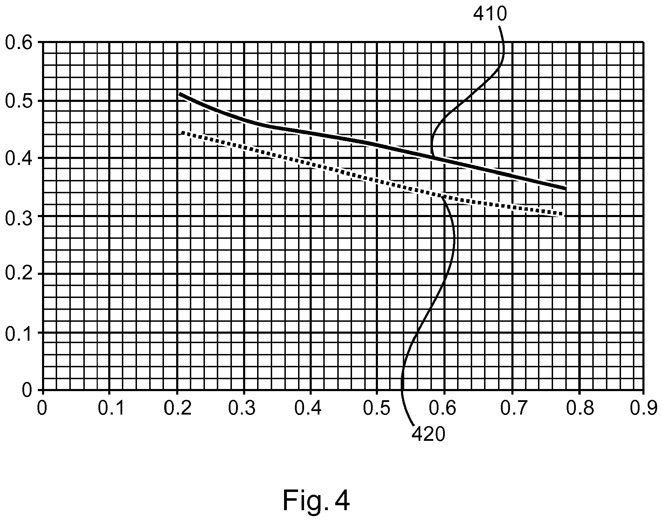

In Fig. 2 sowie den weiteren Figuren 3 und 4 ist auf der horizontalen Achse der normierte Rotorblattradius aufgetragen, das heißt eine Position in Längsrichtung des Rotorblattes ausgehend von der Nabe, die mit der Länge des Rotorblattes normiert wurde. Erfindungsgemäß wird somit die Aufgabe gelöst, die aerodynamisch bedenklichen Profile mit hohen relativen Dicken gegenüber den strukturell vorteilhaften Dickenprofilen abzuwiegen. Dies gestaltet sich durch die Trennstelle 109 insbesondere bei zweigeteilten oder mehrgeteilten Rotorblättern 108 als besonders schwierig. Zur Lösung schlägt die Erfindung eine Maßzahl F vor, die im Wesentlichen einem Integral der relativen Dicke entspricht:

$$F = \int_{x1}^{x2} \frac{d}{t}\, dx$$

Hierbei ist $d$ die Dicke des Rotorblattes 108 an einer relativen Position $x = \dfrac{r}{R}$ und $t$ die lokale Profiltiefe an der Stelle x .

Der Verlauf der Maßzahl F ist schematisch für mehrere verschiedene Rotorblätter in Fig. 3 gezeigt. Als untere Integralgrenze $x_1$ hat sich hierbei der Wert 0,2 als besonders vorteilhaft gezeigt. Ein Verlauf 310 der Maßzahl F entspricht hierbei dem für ein erfindungsgemäßes Rotorblatt 108 berechneten Verlauf, während ein Verlauf 320 einem Vergleichsverlauf eines bekannten einteiligen Rotorblattes entspricht. Es kann gesehen werden, dass die Maßzahl F für das erfindungsgemäße Rotorblatt 108 einen höheren Wert annimmt, als dies für die bekannten einteiligen Rotorblätter der Fall ist. Es sollte beachtet werden, dann zur Berechnung der Maßzahl F ausschließlich relative Größen, die nicht mit Einheiten behaftet sind, herangezogen werden. Natürlich können auch andere Maßzahlen, die dem charakteristischen Verlauf der erfindungsgemäßen Rotorblätter 108 Rechnung tragen, alternativ eingesetzt werden.

Ein weiteres Beispiel zeigt Fig. 4, in der die mittlere relative Dicke für verschiedene Rotorblätter über die relative Blattposition aufgetragen ist. Hierbei entspricht ebenfalls ein Verlauf 410 einem exemplarischen Verlauf der mittleren relativen Dicke eines erfindungsgemäßen Rotorblattes 108, wobei ein Verlauf 420 exemplarisch für ein bekanntes, einteiliges Rotorblatt steht. Die mittlere relative Dicke des erfindungsgemäßen Rotorblattes liegt über den gesamten aufgetragenen Bereich deutlich oberhalb des Verlaufes 420 der bekannten Rotorblätter. Anders ausgedrückt, in dem Mittelbereich des Blattes zwischen 0,2 und 0,8 der relativen Blattlänge ist der Verlauf 410 immer höher als der Verlauf 420 der bekannten einteiligen Rotorblattentwürfe.

In diesem Beispiel ist die mittlere relative Blattdicke für den Bereich ab 0,2 des relativen Blattradius bestimmt. Das heißt, dass der Bereich von 0,2 bis zu dem auf der Horizontalen aufgetragenen Wert bestimmt wird. Zur Berechnung kann beispielsweise die Maßzahl F mit der unteren Grenze $x_1 = 0,2$ gebildet werden und das Ergebnis durch den Abstand des untersuchten Wertes von 0,2 geteilt werden. Natürlich können auch andere Bereiche für die Beurteilung der mittleren relativen Dicke herangezogen werden, die nicht notwendigerweise bei 0,2 beginnen. Beispielsweise kann also auch ein Bereich von 0,1 oder auch von 0,3 des relativen Blattradius untersucht werden.

**Patentansprüche**

1.  Rotorblatt (108) einer Windenergieanlage (100), wobei

    das Rotorblatt (108) in Längsrichtung an einer Trennstelle (109) in wenigstens eine nabennahe Rotorblattkomponente und eine nabenferne Rotorblattkomponente geteilt ist, wobei die nabennahe und die nabenferne Rotorblattkomponente für einen Betrieb der Windenergieanlage (100) an der Trennstelle (109) verbindbar sind,
    wobei
    ein Verhältnis aus Profildicke zu Profiltiefe, genannt relative Dicke, an der Trennstelle (109) innerhalb eines Bereiches von 0,4 bis 0,5 liegt, **dadurch gekennzeichnet, dass**
eine Summe der Längen der an der Trennstelle (109) verbundenen nabennahen und nabenfernen Rotorblattkomponente eine Blattlänge des Rotorblattes (108) ergibt, wobei die Trennstelle (109) sich in einem Bereich von 27% bis 33% der Blattlänge von der Nabe aus betrachtet, befindet.

2. Rotorblatt (108) nach Anspruch 1, wobei
eine absolute Dicke des Rotorblattes (108) an der Trennstelle (109) mindestens 1,70 m beträgt.

3. Rotorblatt (108) nach einem der vorstehenden Ansprüche, wobei

eine mittlere relative Dicke zwischen einer ersten Position der relativen Blattlänge und einer zweiten Position der relativen Blattlänge als ein Verhältnis des bestimmten Integrals der relativen Dicke von der ersten Position zu der zweiten Position zu einem Abstand zwischen erster Position und zweiter Position definiert ist,
wobei die mittlere relative Dicke von 20% bis 30% der relativen Blattlänge wenigstens 0,460 beträgt und/oder
wobei die mittlere relative Dicke von 20% bis 50% der relativen Blattlänge wenigstens 0,390 beträgt und/oder
wobei die mittlere relative Dicke von 20% bis 70% der relativen Blattlänge wenigstens 0,33 beträgt.

4. Rotorblatt (108) nach einem der vorstehenden Ansprüche, wobei das Rotorblatt (108)

einer Konstruktionsmaßzahl genügt, wobei die Konstruktionsmaßzahl als bestimmtes Integral der relativen Dicke über einen Bereich der relativen Blattlänge definiert ist, wobei eine untere Grenze des Integrals auf eine Position von 20% der Blattlänge festgelegt ist und die Konstruktionsmaßzahl für beliebige Werte der oberen Grenze auswertbar ist, wobei
die Konstruktionsmaßzahl für eine obere Grenze von 45% der Blattlänge mindestens 0,1 beträgt und/oder
die Konstruktionsmaßzahl für eine obere Grenze von 80% der Blattlänge mindestens 0,2 beträgt.

5. Rotorblatt (108) nach Anspruch 4, wobei

die Konstruktionsmaßzahl für die obere Grenze von 45% der Blattlänge höchstens 0,12 beträgt und/oder

die Konstruktionsmaßzahl für die obere Grenze von 80% der Blattlänge höchstens 0,24 beträgt.

6. Windenergieanlage (100) mit wenigstens einem Rotorblatt (108) nach einem der vorstehenden Ansprüche.

7. Windpark mit mehreren Windenergieanlagen (100) nach Anspruch 6.

8. Verfahren zur Auslegung eines Rotorblattes (108) einer Windenergieanlage (100),

wobei das Rotorblatt (108) in Längsrichtung an einer Trennstelle (109) in wenigstens eine nabennahe Rotorblattkomponente und eine nabenferne Rotorblattkomponente geteilt ist, wobei
die nabennahe und die nabenferne Rotorblattkomponente für einen Betrieb der Windenergieanlage (100) an der Trennstelle (109) verbindbar sind,
wobei
ein Verhältnis aus Profildicke zu Profiltiefe, genannt relative Dicke, an der Trennstelle (109) innerhalb eines Bereiches von 0,4 bis 0,5 festgelegt wird,
**dadurch gekennzeichnet, dass**
eine Summe der Längen der an der Trennstelle (109) verbundenen nabennahen und nabenfernen Rotorblattkomponente eine Blattlänge des Rotorblattes (108) ergibt, wobei
die Trennstelle (109) sich in einem Bereich von 27% bis 33% der Blattlänge von der Nabe aus betrachtet, befindet.

9. Verfahren nach Anspruch 8, wobei

zur Auslegung des Rotorblattes (108) eine Abwägung zwischen strukturell nötiger höherer relativer Dicke an der Trennstelle (109) und aerodynamisch gewünschter geringerer relativer Dicke an der Trennstelle (109) anhand einer mittleren relativen Dicke erfolgt, wobei
die mittlere relative Dicke zwischen einer ersten Position der relativen Blattlänge und einer zweiten Position der relativen Blattlänge als ein Verhältnis des bestimmten Integrals der relativen Dicke von der ersten Position zu der zweiten Position zu einem Abstand zwischen erster Position und zweiter Position definiert ist,
wobei die mittlere relative Dicke von 20% bis 30% der relativen Blattlänge wenigstens 0,460 beträgt und/oder
wobei die mittlere relative Dicke von 20% bis 50% der relativen Blattlänge wenigstens 0,390 beträgt und/oder
wobei die mittlere relative Dicke von 20% bis 70% der relativen Blattlänge wenigstens 0,33 beträgt.

10. Verfahren nach Anspruch 8 oder 9, wobei

zur Auslegung des Rotorblattes (108) eine Abwägung zwischen strukturell nötiger höherer relativer Dicke an der Trennstelle (109) und aerodynamisch gewünschter geringerer relativer Dicke an der Trennstelle (109) anhand einer Konstruktionsmaßzahl erfolgt, wobei die Konstruktionsmaßzahl als bestimmtes Integral der relativen Dicke über einen Bereich der relativen Blattlänge definiert ist, wobei eine untere Grenze des Integrals auf eine Position von 20% der Blattlänge festgelegt ist und die Konstruktionsmaßzahl für beliebige Werte der oberen Grenze auswertbar ist, wobei die Konstruktionsmaßzahl für eine obere Grenze von 45% der Blattlänge mindestens 0,1 beträgt und/oder die Konstruktionsmaßzahl für eine obere Grenze von 80% der Blattlänge mindestens 0,2 beträgt.

11. Verfahren nach Anspruch 10, wobei

die Konstruktionsmaßzahl für die obere Grenze von 45% der Blattlänge höchstens 0,12 beträgt und/oder die Konstruktionsmaßzahl für die obere Grenze von 80% der Blattlänge höchstens 0,24 beträgt.

12. Rotorblatt nach Anspruch 1 oder Verfahren nach Anspruch 8, wobei die relative Dicke an der Trennstelle (109) innerhalb eines Bereiches von 0,42 bis 0,46 liegt bzw. festgelegt wird.

13. Rotorblatt nach Anspruch 2 oder Verfahren nach Anspruch 9, wobei_die mittlere relative Dicke von 20% bis 70% der relativen Blattlänge wenigstens 0,35 beträgt.

**Claims**

1. A rotor blade (108) of a wind turbine (100), wherein

the rotor blade (108) is split into at least one rotor blade component which is close to the hub and one rotor blade component which is remote from the hub at a separation point (109) in the longitudinal direction, wherein the rotor blade component which is close to the hub and the rotor blade component which is remote from the hub can be connected at the separation point (109) for operation of the wind turbine (100), wherein

a ratio of profile thickness to profile depth, called relative thickness, at the separation point (109) lies within a range of from 0.4 to 0.5, **characterized in that** a sum of the lengths of the rotor blade component which is close to the hub and the rotor blade component which is remote from the hub, which rotor blade components are connected at the separation point (109), gives a blade length of the rotor blade (108), wherein the separation point (109) is located in a region of from 27% to 33% of the blade length as viewed from the hub.

2. The rotor blade (108) as claimed in claim 1, wherein an absolute thickness of the rotor blade (108) at the separation point (109) is at least 1.70 m.

3. The rotor blade (108) as claimed in one of the preceding claims, wherein

a mean relative thickness between a first position of the relative blade length and a second position of the relative blade length is defined as a ratio of the definite integral of the relative thickness from the first position to the second position to a distance between the first position and the second position, wherein the mean relative thickness of from 20% to 30% of the relative blade length is at least 0.460 and/or wherein the mean relative thickness of from 20% to 50% of the relative blade length is at least 0.390 and/or wherein the mean relative thickness of from 20% to 70% of the relative blade length is at least 0.33.

4. The rotor blade (108) as claimed in one of the preceding claims, wherein the rotor blade (108) complies with a structural dimensionless parameter,

the structural dimensionless parameter being defined as the definite integral of the relative thickness over a region of the relative blade length, wherein a lower limit of the integral is defined at a position of 20% of the blade length and the structural dimensionless parameter can be evaluated for any desired values of the upper limit, wherein the structural dimensionless parameter for an upper limit of 45% of the blade length is at least 0.1 and/or the structural dimensionless parameter for an upper limit of 80% of the blade length is at least 0.2.

5. The rotor blade (108) as claimed in claim 4, wherein

the structural dimensionless parameter for the upper limit of 45% of the blade length is at most 0.12 and/or

the structural dimensionless parameter for the upper limit of 80% is at most 0.24.

6. A wind turbine (100) comprising at least one rotor blade (108) as claimed in one of the preceding claims.

7. A wind farm comprising a plurality of wind turbines (100) as claimed in claim 6.

8. A method for designing a rotor blade (108) of a wind turbine (100),

wherein the rotor blade (108) is split into at least one rotor blade component which is close to the hub and one rotor blade component which is remote from the hub at a separation point (109) in the longitudinal direction, wherein the rotor blade component which is close to the hub and the rotor blade component which is remote from the hub can be connected at the separation point (109) for operation of the wind turbine (100), wherein a ratio of profile thickness to profile depth, called relative thickness, at the separation point (109) is defined within a range of from 0.4 to 0.5,

**characterized in that**

a sum of the lengths of the rotor blade component which is close to the hub and the rotor blade component which is remote from the hub, which rotor blade components are connected at the separation point (109), gives a blade length of the rotor blade (108), wherein the separation point (109) is located in a region of from 27% to 33% of the blade length as viewed from the hub.

9. The method as claimed in claim 8, wherein,

for the purpose of designing the rotor blade (108), a trade-off is made between a structurally necessary higher relative thickness at the separation point (109) and an aerodynamically desired lower relative thickness at the separation point (109) on the basis of a mean relative thickness, wherein the mean relative thickness between a first position of the relative blade length and a second position of the relative blade length is defined as a ratio of the definite integral of the relative thickness from the first position to the second position to a distance between the first position and the second position,

wherein the mean relative thickness of from 20% to 30% of the relative blade length is at least 0.460 and/or

wherein the mean relative thickness of from 20% to 50% of the relative blade length is at least 0.390 and/or

wherein the mean relative thickness of from 20% to 70% of the relative blade length is at least 0.33.

10. The method as claimed in claim 8 or 9, wherein,

for the purpose of designing the rotor blade (108), a trade-off is made between a structurally necessary higher relative thickness at the separation point (109) and an aerodynamically desired lower relative thickness at the separation point (109) on the basis of a structural dimensionless parameter, wherein the structural dimensionless parameter is defined as the definite integral of the relative thickness over a region of the relative blade length, wherein a lower limit of the integral is defined at a position of 20% of the blade length and the structural dimensionless parameter can be evaluated for any desired values of the upper limit, wherein the structural dimensionless parameter for an upper limit of 45% of the blade length is at least 0.1 and/or the structural dimensionless parameter for an upper limit of 80% of the blade length is at least 0.2.

11. The method as claimed in claim 10, wherein

the structural dimensionless parameter for the upper limit of 45% of the blade length is at most 0.12 and/or the structural dimensionless parameter for the upper limit of 80% of the blade length is at most 0.24.

12. The rotor blade as claimed in claim 1 or the method as claimed in claim 8, wherein the relative thickness at the separation point (109) is defined within a range of from 0.42 to 0.46.

13. The rotor blade as claimed in claim 2 or the method as claimed in claim 9, wherein the mean relative thickness of from 20% to 70% of the relative blade length is at least 0.35.

**Revendications**

1. Pale de rotor (108) d'une éolienne (100), dans laquelle

la pale de rotor (108) est divisée dans le sens longitudinal en un point de séparation (109) en au moins un composant de pale de rotor proche du moyeu et un composant de pale de rotor éloigné du moyeu, dans lequel

les composants de pale de rotor proche du moyeu et éloigné du moyeu peuvent être reliés pour un fonctionnement de l'éolienne (100) au point de séparation (109),

dans laquelle

un rapport entre l'épaisseur de profil et la profondeur de profil, appelée épaisseur relative, se situe au point de séparation dans une plage de 0,4 à 0,5,

**caractérisée en ce que**

une somme des longueurs des composants de pale de rotor proche et éloigné du moyeu reliés au point de séparation (109) produit une longueur de pale de la pale de rotor (108), dans laquelle

le point de séparation (109) se situe dans une plage de 27 % à 33 % de la longueur de pale, considérée depuis le moyeu.

2.  Pale de rotor (108) selon la revendication 1, dans laquelle

une épaisseur absolue de la pale de rotor (108) s'élève au point de séparation (109) au moins à 1,70 m.

3.  Pale de rotor (108) selon l'une quelconque des revendications précédentes, dans laquelle

une épaisseur relative moyenne entre une première position de la longueur de pale relative et une seconde position de la longueur de pale relative est définie comme un rapport de l'intégrale déterminée de l'épaisseur relative de la première position à la seconde position à une distance entre la première position et la seconde position, dans laquelle l'épaisseur relative moyenne de 20 % à 30 % de la longueur de pale relative s'élève au moins à 0,460 et/ou

dans laquelle l'épaisseur relative moyenne de 20 % à 50 % de la longueur de pale relative s'élève au moins à 0,390 et/ou

dans laquelle l'épaisseur relative moyenne de 20 % à 70 % de la longueur de pale relative s'élève au moins à 0,33.

4.  Pale de rotor (108) selon l'une quelconque des revendications précédentes, dans laquelle la pale de rotor (108)

satisfait à un chiffre d'indice de construction, dans laquelle le chiffre d'indice de construction est défini comme intégrale déterminée de l'épaisseur relative sur une zone de la longueur de pale relative, dans laquelle une limite inférieure de l'intégrale est fixée à une position de 20 % de la longueur de pale et le chiffre d'indice de construction peut être estimé pour des valeurs quelconques de la limite supérieure, dans laquelle

le chiffre d'indice de construction pour une limite supérieure de 45 % de la longueur de pale s'élève au moins à 0,1 et/ou

le chiffre d'indice de construction pour une limite supérieure de 80 % de la longueur de pale s'élève au moins à 0,2.

5.  Pale de rotor (108) selon la revendication 4, dans laquelle

le chiffre d'indice de construction pour la limite supérieure de 45 % de la longueur de pale s'élève au plus à 0,12 et/ou

le chiffre d'indice de construction pour la limite supérieure de 80 % de la longueur de pale s'élève au plus à 0,24.

6.  Eolienne (100) avec au moins une pale de rotor (108) selon l'une quelconque des revendications précédentes.

7.  Parc éolien avec plusieurs éoliennes (100) selon la revendication 6.

8.  Procédé de conception d'une pale de rotor (108) d'une éolienne (100),

dans lequel la pale de rotor (108) est divisée dans le sens longitudinal en un point de séparation (109) en au moins un composant de pale de rotor proche du moyeu et un composant de pale de rotor éloigné du moyeu, dans lequel

les composants de pale de rotor proche du moyeu et éloigné du moyeu peuvent être reliés pour un fonctionnement de l'éolienne (100) au point de séparation (109),

dans lequel

un rapport entre l'épaisseur de profil et la profondeur de profil, appelée épaisseur relative, se situe au point de séparation (109) dans une plage de 0,4 à 0,5,

**caractérisé en ce que**

une somme des longueurs des composants de pale de rotor proche et éloigné du moyeu reliés au point de séparation (109) produit une longueur de pale de la pale de rotor (108), dans lequel

le point de séparation (109) se situe dans une plage de 27 % à 33 % de la longueur de pale, considérée depuis le moyeu.

9.  Procédé selon la revendication 8, dans lequel pour la conception de la pale de rotor (108), une pondération entre l'épaisseur relative supérieure nécessaire structurellement au point de séparation (109) et l'épaisseur relative inférieure souhaitée de manière aérodynamique au point de séparation (109) est effectuée au moyen d'une épaisseur relative moyenne, dans lequel

l'épaisseur relative moyenne entre une première position de la longueur de pale relative et une seconde position de la longueur de pale relative est définie comme un rapport de l'intégrale déterminée de l'épaisseur relative de la première position à la seconde position à une distance entre la première position et la seconde position, dans lequel l'épaisseur relative moyenne de 20 % à 30 % de la longueur de pale relative s'élève au moins à 0,460 et/ou
dans lequel l'épaisseur relative moyenne de 20 % à 50 % de la longueur de pale relative s'élève au moins à 0,390 et/ou
dans lequel l'épaisseur relative moyenne de 20 % à 70 % de la longueur de pale relative s'élève au moins à 0,33.

10. Procédé selon la revendication 8 ou 9, dans lequel

pour la conception de la pale de rotor (108), une pondération entre l'épaisseur relative supérieure nécessaire structurellement au point de séparation (109) et l'épaisseur relative inférieure souhaitée de manière aérodynamique au point de séparation (109) est effectuée au moyen d'un chiffre d'indice de construction, dans lequel
le chiffre d'indice de construction est défini comme intégrale déterminée de l'épaisseur relative sur une zone de la longueur de pale relative, dans lequel une limite inférieure de l'intégrale est fixée à une position de 20 % de la longueur de pale et le chiffre d'indice de construction peut être estimé pour des valeurs quelconques de la limite supérieure, dans lequel
le chiffre d'indice de construction pour une limite supérieure de 45 % de la longueur de pale s'élève au moins à 0,1 et/ou
le chiffre d'indice de construction pour une limite supérieure de 80 % de la longueur de pale s'élève au moins à 0,2.

11. Procédé selon la revendication 10, dans lequel le chiffre d'indice de construction pour la limite supérieure de 45 % de la longueur de pale s'élève au plus à 0,12 et/ou
le chiffre d'indice de construction pour la limite supérieure de 80 % de la longueur de pale s'élève au plus à 0,24.

12. Pale de rotor selon la revendication 1 ou procédé selon la revendication 8, dans laquelle l'épaisseur relative au point de séparation (109) se situe ou est fixée dans une plage de 0,42 à 0,46.

13. Pale de rotor selon la revendication 2 ou procédé selon la revendication 9, dans laquelle l'épaisseur relative moyenne de 20 % à 70 % de la longueur de pale relative s'élève au moins à 0,35.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015064017 A1